# EUROPÄISCHE PATENTSCHRIFT

(11) **EP 1 657 116 B1**
(45) Veröffentlichungstag und Bekanntmachung des Hinweises auf die Patenterteilung: **23.01.2008**
(21) Anmeldenummer: 04026818.7
(22) Anmeldetag: 11.11.2004
(51) Int. Cl.: B60R 16/02, H02G 3/14

(54) **Elektronikgehäuse**
Electronic casing
Boîtier électronique

(43) Veröffentlichungstag der Anmeldung: 17.05.2006
(73) Patentinhaber: Delphi Technologies, Inc., Troy, MI 48007 (US)
(72) Erfinder: Ramaekers, Udo, 58332 Schwelm (DE); Koburg, Dirk, 42897 Remscheid (DE); Ackermann, Jörg, 58706 Menden (DE); Paas, Ulrich, 42349 Wuppertal (DE)
(74) Vertreter: Manitz, Finsterwald & Partner GbR

(56) Entgegenhaltungen:
- EP-A- 1 155 920
- GB-A- 442 364
- US-A- 5 317 108
- US-A- 5 621 192
- US-A- 5 777 843
- US-A1- 2002 112 873
- US-A1- 2004 144 556
- PATENT ABSTRACTS OF JAPAN Bd. 1999, Nr. 04, 30. April 1999 (1999-04-30) -& JP 11 008013 A (HARNESS SOGO GIJUTSU KENKYUSHO:KK; SUMITOMO WIRING SYST LTD; SUMITOMO), 12. Januar 1999 (1999-01-12)

## Beschreibung

Die Erfindung betrifft einen Multifunktionsträger, insbesondere mit einem Gehäuse zur Aufnahme wenigstens eines elektrischen Bauteils, der mit einer Grundstruktur eines Fahrzeugs verbunden ist.

Ein derartiger Multifunktionsträger ist grundsätzlich bekannt und dient beispielsweise zur Halterung von elektrischen Relais an einer Fahrzeugkarosserie. Aus Stabilitätsgründen ist ein solcher Multifunktionsträger typischerweise aus einem Metallmaterial gebildet oder zumindest mit einem Metallrahmen verstärkt. Dies bedeutet nicht nur erhöhte Herstellungskosten, sondern auch ein erhöhtes Eigengewicht des Multifunktionsträgers. Aufgrund seines Eigengewichts muss der Multifunktionsträger fest mit der Fahrzeugkarosserie verbunden, z.B. verschraubt werden. Dies erschwert zum einen den Austausch des Multifunktionsträgers und gegebenenfalls eines in dem Multifunktionsträger untergebrachten Relais, und zum anderen den Zugriff auf weitere, zwischen dem Multifunktionsträger und der Fahrzeugkarosserie angeordnete elektrische Bauteile.

Aus der GB-A-442 364 ist ein Sicherungsgehäuse mit einem Gehäuseunterteil und einem Gehäuseoberteil bekannt, welche zusammen ein Scharnier derart bilden, dass das Gehäuseoberteil bezüglich des Gehäuseunterteils in eine Montageposition verschwenkbar ist, in welcher die Gehäuseteile voneinander trennbar sind.

Die EP-A-1 155 920 offenbart einen Multifunktionsträger gemäß dem Oberbegriff des Anspruchs 1.

Der Erfindung liegt die Aufgabe zugrunde, einen Multifunktionsträger zu schaffen, der auf einfache Weise mit der Grundstruktur des Fahrzeugs verbindbar ist und den Zugriff auf gegebenenfalls unter dem Multifunktionsträger befindliche Bauteile erleichtert.

Zur Lösung der Aufgabe ist ein Multifunktionsträger mit den Merkmalen des Anspruchs 1 vorgesehen.

Der erfindungsgemäße Multifunktionsträger, der insbesondere ein Gehäuse zur Aufnahme wenigstens eines elektrischen Bauteils aufweist, ist mittels eines Scharniers mit einer Grundstruktur eines Fahrzeugs verbunden. Der Multifunktionsträger ist um eine Scharnierachse des Scharniers in eine Montageposition verschwenkbar, in welcher die Verbindung von Multifunktionsträger und Grundstruktur lösbar ist.

Der Multifunktionsträger kann ein Träger für Relais, elektrische Sicherungen oder andere elektrische oder elektronische Bauelemente oder Module sein und zu diesem Zweck ein Gehäuse zur Aufnahme mindestens eines elektrischen Relais, etc. aufweisen. Bei der Grundstruktur kann es sich um einen Abschnitt der Fahrzeugkarosserie oder um eine an der Karosserie angebrachte Rahmen- oder Gehäusestruktur handeln, in der weitere elektrische oder elektronische Bauteile oder Module, wie z.B. Relais oder elektrische Sicherungen, etc. belastungsfrei untergebracht sind.

Die Verbindung von Multifunktionsträger und Grundstruktur mittels eines Scharniers ermöglicht eine Verschwenkung des Multifunktionsträgers relativ zu der Grundstruktur. Die Verschwenkbarkeit des Multifunktionsträgers erleichtert den Zugriff auf Bauteile, die sich unter dem Multifunktionsträger befinden, d.h. die zwischen dem Multifunktionsträger und der Karosserie, z.B. in der Grundstruktur, angeordnet sind, indem die Grundstruktur durch eine einfache Verschwenkung des Multifunktionsträgers freigelegt werden kann.

Durch die Lösbarkeit des Scharniers lässt sich der erfindungsgemäße Multifunktionsträger nicht nur leicht und insbesondere ohne Zuhilfenahme von Werkzeug an der Grundstruktur montieren, sondern, z.B. zu Austausch- oder Wartungszwecken, auch leicht wieder von dieser abnehmen.

Erfindungsgemäß bilden der Multifunktionsträger und die Grundstruktur die Flügelteile des Scharniers. Das Scharnier wird mit anderen Worten aus dem Multifunktionsträger und der Grundstruktur selbst gebildet. Der Multifunktionsträger ist also nicht mittels zusätzlicher Metallrahmen oder Metallhalter an der Grundstruktur angebracht, sondern direkt mit dieser verbunden. Dadurch wird eine erhebliche Gewichtsersparnis erreicht.

Des weiteren weist das eine Flügelteil wenigstens einen Scharnierachsenabschnitt und das andere Flügelteil wenigstens einen hakenartig ausgebildeten Lagerabschnitt auf. Dabei umfasst bevorzugt der Multifunktionsträger den wenigstens einen Scharnierachsenabschnitt und die GrundStruktur den wenigstens einen Lagerabschnitt. Die hakenartige Ausbildung der Lagerabschnitte ermöglicht auf einfache Weise das Zusammenfügen bzw. Lösen des Scharniers.

Außerdem sind wenigstens ein erster Scharnierachsenabschnitt mit einem halbkreisförmigen Querschnitt und wenigstens ein zweiter Scharnierachsenabschnitt mit einem zum ersten Scharnierachsenabschnitt komplementär halbkreisförmigen Querschnitt vorgesehen.

Die halbkreisförmigen Scharnierachsenabschnitte ermöglichen in der Montageposition des Multifunktionsträgers ein codiertes kraftloses Zusammenfügen der beiden Scharnierteile, d.h. des Multifunktionsträgers und der Grundstruktur. Des weiteren sorgen sie für eine unlösbare Verbindung von Multifunktionsträger und Grundstruktur, sobald der Multifunktionsträger aus der Montageposition verschwenkt wird.

Durch die Anordnung von zueinander komplementären halbkreisförmigen Querschnitten ergibt sich über die Länge der Scharnierachse gesehen insgesamt ein runder Scharnierachsenquerschnitt. Dies bewirkt zum einen eine gleichmäßige Verteilung der Lagerkräfte in dem Scharnier und stellt zum anderen eine besonders gute Verschwenkbarkeit des Multifunktionsträgers sicher.

Vorteilhafte Ausführungsformen der Erfindung sind den Unteransprüchen, der Beschreibung und der Zeichnung zu entnehmen.

Vorteilhafterweise sind mehrere Scharnierachsenabschnitte und/oder mehrere Lagerabschnitte segmentartig axial hintereinander angeordnet. Dadurch wird eine gleichmäßige Kraftverteilung in dem Scharnier erreicht. Dies ermöglicht eine Ausbildung des Multifunktionsträgers aus einem Material mit einer niedrigeren Festigkeit als beispielsweise Stahl, z.B. aus einem Kunststoffmaterial, wodurch eine erhebliche Kosteneinsparung erreicht wird, da nicht nur der Multifunktionsträger, beispielsweise als Kunststoffspritzgussteil, mit einem besonders geringen wirtschaftlichen Aufwand herstellbar ist, sondern auch auf zusätzliche metallische Versteifungselemente, wie z.B. Stahlrahmen, verzichtet werden kann.

Die Weite einer Aufnahmeöffnung wenigstens eines hakenartigen Lagerabschnitts kann etwa der Hälfte des Kreisdurchmessers eines Scharnierachsenabschnitts mit halbkreisförmigem Querschnitt entsprechen. Durch die Anpassung der Weite der Aufnahmeöffnung an die minimale Scharnierachsenabschnittstärke ist sichergestellt, dass sich der Multifunktionsträger nur dann von der Grundstruktur lösen lässt, wenn die halbkreisförmigen Scharnierachsenabschnitte so orientiert sind, dass sie gerade durch die Aufnahmeöffnung hindurchpassen. In allen anderen Schwenkpositionen des Multifunktionsträgers sind die Scharnierachsenabschnitte sicher und unlösbar in den Lagerabschnitten gelagert.

Vorzugsweise sind die halbkreisförmigen Scharnierachsenabschnitte so orientiert, dass sie in der Montageposition des Multifunktionsträgers in die Lagerabschnitte einführbar bzw. aus diesen entnehmbar sind. Auf diese Weise wird die Lösbarkeit der Verbindung von Multifunktionsträger und Grundstruktur in der Montageposition des Multifunktionsträgers erreicht und beispielsweise ein Austausch des Multifunktionsträgers vereinfacht oder ein uneingeschränkter Zugriff auf die Grundstruktur ermöglicht.

Gemäß einer weiteren vorteilhaften Ausführungsform ist eine Vorverriegelungseinrichtung zur Sicherung des Multifunktionsträgers in der Montageposition vorgesehen. Wie bereits erwähnt wurde, kann das Scharnier nur dann zusammengefügt bzw. gelöst werden, wenn sich der Multifunktionsträger genau in der Montageposition befindet. Durch die Vorverriegelungseinrichtung wird nicht nur die Einnahme der Montageposition unterstützt, sondern der Multifunktionsträger auch in der Montageposition gesichert. Dies führt zu einer erheblichen Vereinfachung der Montage bzw. Demontage des Multifunktionsträgers.

Die Vorverriegelungseinrichtung kann einen an den Multifunktionsträger angeformten Vorsprung umfassen, der in der Montageposition des Multifunktionsträgers mit einem an der Grundstruktur vorgesehenen Anschlag zusammenwirkt. Zum Zusammenfügen bzw. Lösen des Scharniers muss der Vorsprung des Multifunktionsträgers lediglich mit dem Anschlag der Grundstruktur in Kontakt gebracht werden. Sobald sich der Vorsprung an dem Anschlag abstützt, befindet sich der Multifunktionsträger automatisch in der Montageposition, und das Scharnier kann zusammengefügt bzw. gelöst werden. Dadurch ist die Montage bzw. Demontage des Multifunktionsträgers noch weiter vereinfacht.

Gemäß einer weiteren vorteilhaften Ausbildung der Erfindung ist eine, insbesondere im Bereich eines zur Scharnierachse entgegengesetzten Endes des Multifunktionsträgers angeordnete, Rastvorrichtung vorgesehen, um den Multifunktionsträger in einer Endmontageposition an der Grundstruktur zu sichern. In der Endmontageposition ist der Multifunktionsträger also nicht nur durch das Scharnier, sondern zusätzlich auch durch die Rastvorrichtung, d.h. mittels einer Rastverbindung, mit der Grundstruktur verbunden. Dadurch ist die Sicherheit der Befestigung des Multifunktionsträgers an der Grundstruktur noch weiter erhöht.

Vorzugsweise ist die Rastverbindung so ausgebildet, dass sie sich leicht per Hand und insbesondere ohne Zuhilfenahme von Werkzeug lösen lässt. Dadurch ist das Zurückklappen des Multifunktionsträgers und der Zugriff auf die Grundstruktur noch weiter vereinfacht.

Die Rastvorrichtung und die Scharnierachse können im Bereich freier Enden beinartiger Vorsprünge des Multifunktionsträgers angeordnet sein. Die beinartigen Vorsprünge können dabei so lang ausgebildet sein, dass die Unterseite eines vom Multifunktionsträger getragenen Gehäuses zu der Grundstruktur des Fahrzeugs beabstandet ist.

Nachfolgend wird die Erfindung anhand einer vorteilhaften Ausführungsform unter Bezugnahme auf die Zeichnung beschrieben. Es zeigen:
- Fig. 1: eine perspektivische Ansicht eines mit einer Grundstruktur eines Fahrzeugs verbundenen erfindungsgemäßen Multifunktionsträgers;
- Fig. 2: eine Seitenansicht des Multifunktionsträgers von Fig. 1;
- Fig. 3: (a) eine Draufsicht auf die Rückseite des Multifunktionsträgers von Fig. 1 und (b) eine Ausschnittsvergrößerung des Scharniers;
- Fig. 4: verschiedene Querschnitte des Scharniers von Fig. 3 in (a) einer Vormontageposition, (b) einer Montageposition und (c) einer Endmontageposition des Multifunktionsträgers;
- Fig. 5: eine Seitenansicht des Scharniers von Fig. 5 in (a) einer Vormontageposition, (b) einer Montageposition und (c) einer Endmontageposition des Multifunktionsträgers;
- Fig. 6: eine perspektivische Ansicht einer weiteren Ausführungsform des Scharniers im nicht zusammengefügten Zustand; und
- Fig. 7: das Scharnier von Fig. 6 im zusammengefügten Zustand.

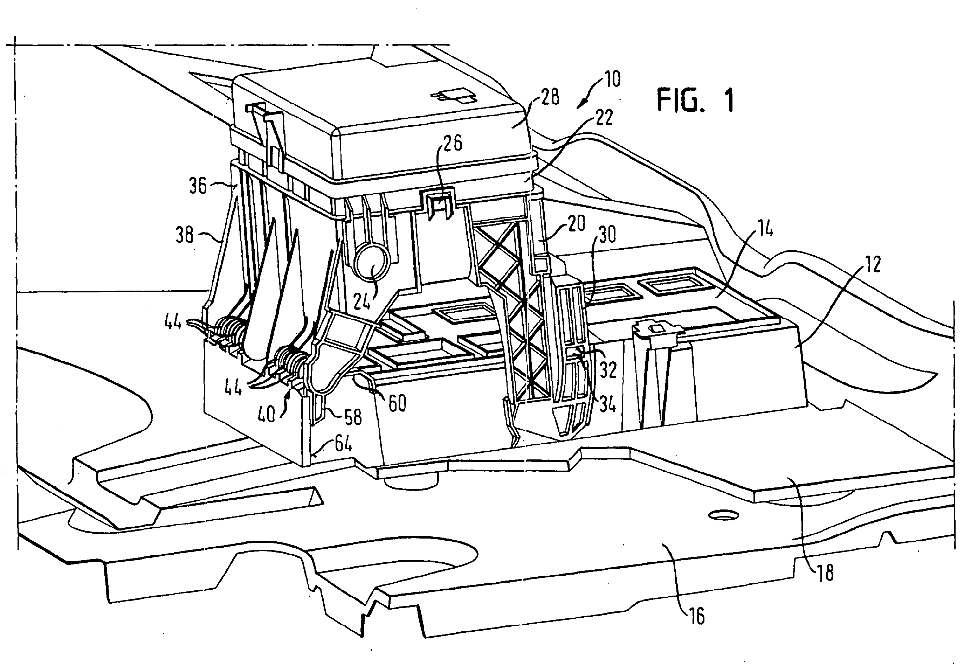

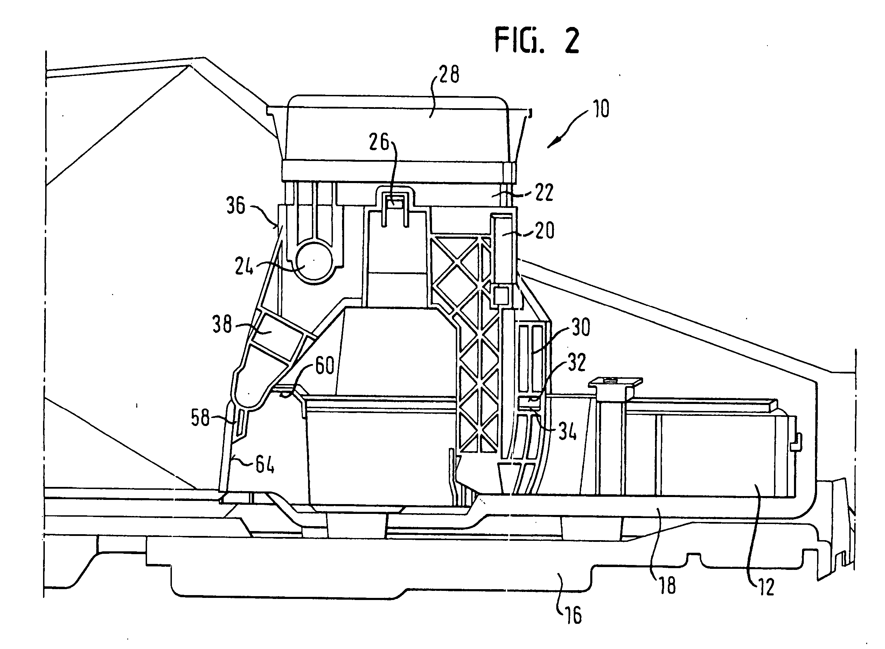

Fig. 1 und 2 zeigen einen mit einer Grundstruktur 12 eines Fahrzeugs verbunden erfindungsgemäßen Multifunktionsträger 10 in einer Endmontageposition.

Bei der Grundstruktur 12 handelt es sich um einen Rahmen, der zur Halterung eines Gehäuseeinsatzes 14 dient. Der Gehäuseeinsatz 14 ist zur Aufnahme von nicht dargestellten elektrischen Bauteilen, wie beispielsweise Sicherungen, Relais oder Fahrzeugelektronikkomponenten, vorgesehen.

Der Rahmen 12 ist an einem Karosserieblech 16 eines Fahrzeugs befestigt, beispielsweise verschraubt. Zwischen dem Rahmen 12 und dem Gehäuseeinsatz 14 einerseits und dem Karosserieblech 16 andererseits ist ein Isolationsmaterial 18 vorgesehen.

Der Multifunktionsträger 10 umfasst ein Gehäuse 20, welches eine im Wesentlichen quaderförmige Grundform aufweist. Das Gehäuse 20 dient ebenfalls zur Aufnahme elektrischer Komponenten. Im dargestellten Ausführungsbeispiel ist das Gehäuse 20 zur Aufnahme einer Relaisplatte 22 vorgesehen, die mit Hilfe von Lagermitteln 24 bezüglich des Gehäuses 20 verschwenkbar mit dem Gehäuse 20 verbunden ist. Zusätzlich ist die Relaisplatte 22 mit Hilfe einer Rastvorrichtung 26 an dem Gehäuse 20 gesichert. Auf ihrer dem Gehäuse 20 abgewandten Seite ist die Relaisplatte 22 durch eine Gehäuseabdeckung 28 geschützt.

An der der Relaisplatte 22 abgewandten Seite des Gehäuses 20, die nachfolgend als Gehäuseunterseite bezeichnet wird, weist der Multifunktionsträger 10 insgesamt vier Trägerbeine 30, 38 auf, die zur Anbindung des Multifunktionsträgers 10 an den Rahmen 12 dienen.

Zwei der Trägerbeine 30, 38 sind in benachbarten Eckbereichen des Gehäuses 20 angeordnet und werden nachfolgend als vordere Trägerbeine 30 bezeichnet. Die vorderen Trägerbeine 30 erstrecken sich im Wesentlichen senkrecht zu der Unterseite des Gehäuses 20 und sind dabei so ausgebildet, dass sie den Rahmen 12 in der Endmontageposition des Multifunktionsträgers 10, wie in Fig. 1 und 2 gezeigt ist, außen seitlich umgreifen.

Die vorderen Trägerbeine 30 umfassen jeweils eine Rastöffnung 32, in die in der Endmontageposition des Multifunktionsträgers 10 jeweils ein Rastvorsprung 34 des Rahmens 12 eingreift, um die Trägerbeine 30 an dem Rahmen 12 zu sichern.

An der den vorderen Trägerbeinen 30 abgewandten Seite des Gehäuses 20, die nachfolgend als Rückseite 36 des Gehäuses 20 bezeichnet wird, sind ferner zwei hintere Trägerbeine 38 vorgesehen. Die hinteren Trägerbeine 38 sind von den vorderen Trägerbeinen 30 weg nach hinten geneigt und erstrecken sich jeweils annähernd über die Hälfte der Breite der Rückseite 36 des Gehäuses 20.

Die hinteren Trägerbeine 38 bilden zusammen mit dem Rahmen 12 ein Scharnier 40, um dessen Scharnierachse der Multifunktionsträger 10 relativ zum Rahmen 12 verschwenkbar ist.

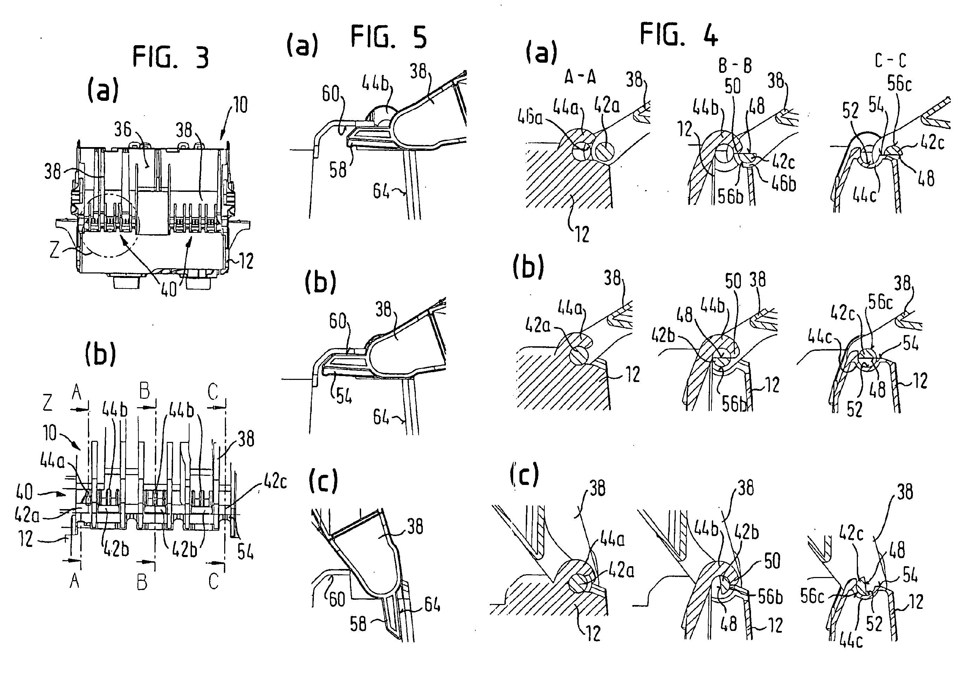

Zu diesem Zweck weist jedes hintere Trägerbein 38 im Bereich seines vom Gehäuse 20 wegweisenden Endes mehrere, im dargestellten Ausführungsbeispiel fünf, Scharnierachsenabschnitte 42 auf (Fig. 3). Die Scharnierachsenabschnitte 42 der beiden hinteren Trägerbeine 38 sind derart segmentartig axial hintereinander angeordnet, dass die Scharnierachse des Scharniers 40 durch alle Scharnierachsenabschnitte 42 verläuft und dabei parallel zur Rückseite des Multifunktionsträgers 10 orientiert ist.

Der Rahmen 12 weist im Bereich seines hinteren oberen Randes mehrere Lagerabschnitte 44 zur Aufnahme der Scharnierachsenabschnitte 42 des Multifunktionsträgers 10 auf. Die Anzahl, die Breite und der Abstand der Lagerabschnitte 44 sind an die der Scharnierachsenabschnitte 42 entsprechend angepasst.

Die Geometrie des Scharniers 40 ist so gewählt, dass sich der Multifunktionsträger 10 und der Rahmen 12 ausschließlich in einer vorbestimmten Relativlage des Multifunktionsträgers 10 bezüglich des Rahmens 12 zusammenfügen bzw. voneinander lösen lassen. Diese Relativlage wird nachfolgend als Montageposition bezeichnet. In allen anderen möglichen Schwenkpositionen ist der Multifunktionsträger 10 unlösbar mit dem Rahmen 12 verbunden.

Wie in Fig. 4 dargestellt ist, wird diese codierte Zusammenfügbarkeit bzw. Lösbarkeit des Scharniers 40 dadurch erreicht, dass jedes hintere Trägerbein 38 einen Scharnierachsenabschnitt 42a mit einem runden Querschnitt und mehrere Scharnierachsenabschnitte 42b mit jeweils einem halbkreisförmigen Querschnitt aufweist. Aus der Zusammenschau von Fig. 3 und 4 ergibt sich, dass auf einen äußeren runden Scharnierachsenabschnitt 42a (links in Fig. 3b) drei mittlere unrunde Scharnierachsenabschnitte 42b folgen, an die sich noch ein weiterer unrunder, äußerer Scharnierachsenabschnitt 42c (rechts in Fig. 3b) anschließt.

Dabei sind die drei mittleren unrunden Scharnierachsenabschnitte 42b einerseits und der äußere unrunde Scharnierachsenabschnitte 42c andererseits komplementär zueinander ausgebildet, d.h. die halbkreisförmigen Scharnierachsenabschnitte 42b, 42c sind so zueinander orientiert, dass sie sich in einer Überlagerung zu einem kreisförmigen Querschnitt ergänzen würden.

Wie Fig. 4 zeigt, sind die Lagerabschnitte 44 des Rahmens 12 entsprechend an die jeweils zugeordneten Scharnierachsenabschnitte 42 angepasst.

Der mit dem runden Scharnierachsenabschnitt 42a korrespondierende Lagerabschnitt 44a weist eine nach hinten offene Hakenform auf, wobei die Weite einer Aufnahmeöffnung 46a für den zugeordneten Scharnierachsenabschnitt 42a etwa dem Durchmesser des kreisrunden Scharnierachsenabschnitts 42a entspricht.

Die zu den mittleren unrunden Scharnierachsenabschnitten 42b gehörigen Lagerabschnitte 44b sind ebenfalls hakenartig ausgebildet. Die Aufnahmeöffnungen 46b dieser Lagerabschnitte 44b weisen jedoch eine Weite auf, die etwa nur der Hälfte des Kreisdurchmessers der halbkreisförmigen Scharnierachsenabschnitte 42b entspricht.

Dies bedeutet, dass ein mittlerer Scharnierachsenabschnitt 42b nur dann in seinen zugehörigen Lagerabschnitt 42b eingeführt bzw. aus diesem entnommen werden kann, wenn er so orientiert ist, dass er der Länge nach durch die Aufnahmeöffnung 46 passt. Dies ist gerade dann der Fall, wenn sich der Multifunktionsträger 10 in seiner Montageposition befindet, wie es in Fig. 4a und 4b dargestellt ist. In dieser Lage des Multifunktionsträgers 10 ist die Planseite 48 des halbkreisförmigen Scharnierachsenabschnitts 42b im Wesentlichen horizontal orientiert und kann sich dadurch an dem freien Ende 50 des Lagerabschnitts 42b vorbei in den Lagerabschnitt 44b hineinbewegen.

Der dritte Lagerabschnitt 44c, der zur Aufnahme des äußeren unrunden Scharnierachsenabschnitts 42c vorgesehen ist, ist nicht hakenförmig, sondern als Lagerschale 52 ausgebildet. Die Lagerschale 52 ist in ihrem hinterem Bereich durch eine Schulter 54 begrenzt, die so hoch ausgebildet ist, dass der zugehörige Scharnierachsenabschnitt 42c zum Zusammenfügen bzw. Lösen des Scharniers 40 nur dann die Schulter 54 überwinden kann, wenn die Planseite 48 dieses Scharnierachsenabschnitts 42c zu der Schulter 54 weist und im wesentlichen horizontal orientiert ist. Wie sich aus Fig. 4a und 4b ergibt, ist auch dies genau dann der Fall, wenn sich der Multifunktionsträger 10 in seiner Montageposition befindet.

Im Ergebnis lassen sich die Scharnierachsenabschnitte 42 in der Montageposition des Multifunktionsträgers 10 also in ihre jeweiligen Lagerabschnitte 44 einsetzen und das Scharnier 40 zusammenfügen (Fig. 4b).

Eine Verschwenkung des Multifunktionsträgers 10 aus seiner Montageposition in Richtung seiner Endmontageposition bewirkt eine Verdrehung der Scharnierachsenabschnitte 42 derart, dass die unrunden Scharnierachsenabschnitte 42b, 42c nicht mehr aus ihren jeweiligen Lagerabschnitten 44b, 44c entnommen werden können.

Wie in Fig. 4c dargestellt ist, sind Scharnierachsenabschnitte 42 in der Endmontageposition des Multifunktionsträgers 10 um mehr als 90° bezüglich ihrer Lage in der Montageposition verdreht. Die unrunden Scharnierachsenabschnitte 42b, 42c sind dadurch im wesentlichen quer zur Aufnahmeöffnung 46b bzw. Schulter 54 ihres jeweiligen Lagerabschnittes 44b, 44c ausgerichtet.

Der äußere runde Scharnierachsenabschnitt 42a ist im wesentlichen passgenau in seinem zugehörigen Lagerabschnitt 44a aufgenommen und kann sich daher - mit Ausnahme der Aufnahmeöffnung 46a - in nahezu jedem Bereich des Lagerabschnitts 44a an diesem abstützen.

Die runden Außenflächen 56b der mittleren, Scharnierachsenabschnitte 42b liegen in der Endmontageposition des Multifunktionsträgers 10 dagegen in einem hinteren oberen Bereich an der Innenseite ihres zugehörigen Lagerabschnitts 44b an, während die runde Außenfläche 56c des äußeren unrunden Scharnierachsenabschnitts 42c zumindest in einem vorderen unteren Bereich an der Lagerschale 52 anliegt.

Dieses Zusammenwirken der Scharnierachsenabschnitte 42 mit den Lagerabschnitten 44 in jeweils unterschiedlichen Bereichen führt zu einer gleichmäßigen Verteilung von Lagerkräften in dem Scharnier 40. Dadurch ist es möglich, den durch den Multifunktionsträger 10 gebildeten Teil des Scharniers 40 und/oder den durch den Rahmen 12 gebildeten Teil des Scharniers 40 aus einem Kunststoffmaterial zu bilden, ohne dabei eine im Vergleich zu einem beispielsweise vollständig aus einem Metallmaterial gebildeten Scharnier reduzierte Tragfähigkeit des Scharniers 40 hinnehmen zu müssen.

Um das Zusammenfügen bzw. Lösen des Scharniers 40 zu erleichtern, ist eine Vorverriegelungseinrichtung vorgesehen. Wie in den Fig. 1, 2 und 5 dargestellt ist, umfasst die Vorverriegelungseinrichtung einen Vorsprung 58 an jedem hinteren Trägerbein 38, der sich jeweils etwa parallel zu den vorderen Trägerbeinen 30 des Multifunktionsträgers 10 erstreckt. Die Vorverriegelungseinrichtung umfasst ferner einen im Bereich der Scharnierachse angeordneten und sich bereichsweise horizontal erstrecken oberen Anschlag 60 an jeder senkrecht zur Schwenkachse verlaufenden Seite des Rahmens 12.

Werden die Vorsprünge 58 zum Zusammenfügen des Scharniers 40 von unten an den horizontalen Abschnitt des oberen Anschlags 60 angelegt, wie es in Fig. 5a dargestellt ist, so befinden sich die unrunden Scharnierachsenabschnitte 42b, 42c automatisch in einer Vormontagelage, die das Einsetzen der Scharnierachsenabschnitte 42 in ihre jeweiligen Lagerabschnitte 44 erlaubt. Die Scharnierachsenabschnitte 42 müssen nunmehr lediglich in die Lagerabschnitte 44 hinein geschoben werden.

Sobald die Scharnierachsenabschnitte 42 in die Lagerabschnitte 44 eingesetzt sind, bilden die runden Scharnierachsenabschnitte 42a einen Lagerpunkt für den Multifunktionsträger 10. Eine durch das Eigengewicht des Multifunktionsträgers 10 verursachte Verschwenkung des Multifunktionsträgers 10 wird durch das Zusammenwirken von Vorsprung 58 und oberem Anschlag 60 verhindert.

Die in Fig. 5b gezeigte Stellung des Multifunktionsträgers 10 stellt folglich nicht nur die Montageposition dar, sondern bildet gleichzeitig auch eine Vorverriegelungsstellung, in welcher der der Multifunktionsträger 10 sicher am Rahmen 12 gelagert ist.

Das Zusammenwirken von Vorsprung 58 und oberem Anschlag 60 begrenzt außerdem die Schwenkbewegung des Multifunktionsträgers 10 in Richtung der Montageposition und kann dadurch eine Beschädigung des Multifunktionsträgers 10, beispielsweise im Falle einer unkontrollierten Schwenkbewegung, verhindern.

Wie in Fig. 1, 2 und 5c zu erkennen ist, weist der Rahmens 12 auf beiden Seiten ferner einen rückseitigen Anschlag 64 auf, der sich etwa rechtwinklig zu dem oberen Anschlag 60 erstreckt. Die rückseitigen Anschläge 64 sind so orientiert, dass die Trägerbeinvorsprünge 58 an ihnen anliegen, wenn sich der Multifunktionsträger 10 in der Endmontageposition befindet. Durch die rückseitigen Anschläge 64 wird somit die Schwenkbewegung des Multifunktionsträgers 10 in Richtung der Endmontageposition beschränkt. Auch hierdurch wird eine Beschädigung des Multifunktionsträgers 10 bei einem unkontrollierten Umklappen verhindert.

Im Gegensatz zu dem voranstehend beschriebenen Ausführungsbeispiel kann der Multifunktionsträger 10 auch mehr als zwei hintere Trägerbeine 38 aufweisen.

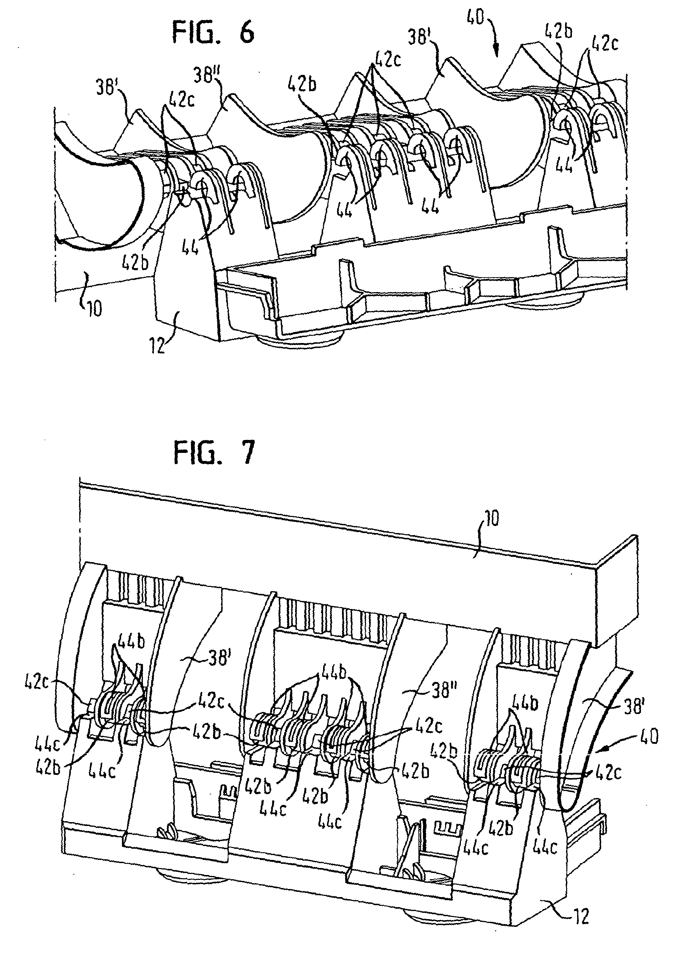

In Fig. 6 und 7 ist ein alternatives Ausführungsbeispiel des Scharniers 40 dargestellt, bei dem der Multifunktionsträger mit insgesamt drei hinteren Trägerbeinen 38 versehen ist. Dabei weisen die beiden äußeren Trägerbeine 38' jeweils vier axial hintereinander angeordnete Scharnierachsenabschnitte 42 und das mittlere Trägerbein 38" insgesamt sieben Scharnierachsenabschnitte 42 auf. Bei jedem Trägerbein 38 wechseln sich die Scharnierachsenabschnitte vom Typ 42b und 42c (Fig. 4) ab. Ein Scharnierachsenabschnitt vom Typ 42a ist bei dieser Ausführungsform nicht ausgebildet, kann aber gegebenenfalls vorgesehen sein. Die zugehörigen Lagerabschnitte 44 des Rahmens 12 sind entsprechend angeordnet und ausgebildet. Hierzu wird auf die Ausführungen zu Fig. 4 verwiesen.

### Bezugszeichenliste

- 10: Multifunktionsträger
- 12: Rahmen
- 14: Gehäuseeinsatz
- 16: Karosserieblech
- 18: Isolationsmaterial
- 20: Gehäuse
- 22: Relaisplatte
- 24: Lagermittel
- 26: Rastvorrichtung
- 28: Gehäuseabdeckung
- 30: Trägerbein
- 32: Rastöffnung
- 34: Rastvorsprung
- 36: Rückseite
- 38: Trägerbein
- 40: Scharnier
- 42: Scharnierachsenabschnitt
- 44: Lagerabschnitt
- 46: Aufnahmeöffnung
- 48: Planseite
- 50: freies Ende
- 52: Lagerschale
- 54: Schulter
- 56: Außenfläche
- 58: Fortsatz
- 60: Anschlag
- 64: Anschlag
- 66: Rückseite

## Patentansprüche

1. Multifunktionsträger (10) mit einem Gehäuse (20) zur Aufnahme wenigstens eines elektrischen Bauteils, der mittels eines Scharniers (40) mit einer Grundstruktur (12) eines Fahrzeugs verbunden ist, wobei der Multifunktionsträger (10) um eine Scharnierachse des Scharniers (40) in eine Montageposition verschwenkbar ist, in welcher die Verbindung von Multifunktionsträger (10) und Grundstruktur (12) lösbar ist, wobei der Multifunktionsträger (10) und die Grundstruktur (12) die Flügelteile des Scharniers (40) bilden und wobei das eine Flügelteil (10) wenigstens einen Scharnierachsenabschnitt (42) und das andere Flügelteil (12) wenigstens einen hakenartig ausgebildeten Lagerabschnitt (44) aufweist,
**dadurch gekennzeichnet, dass**
wenigstens ein erster Scharnierachsenabschnitt (42b) mit einem halbkreisförmigen Querschnitt und wenigstens ein zweiter Scharnierachsenabschnitt (42c) mit einem zum ersten Scharnierachsenabschnitt (42b) komplementär halbkreisförmigen Querschnitt vorgesehen sind.

2. Multifunktionsträger (10) nach Anspruch 1,
**dadurch gekennzeichnet, dass**
der Multifunktionsträger (10) den wenigstens einen Scharnierachsenabschnitt (42) und die Grundstruktur (12) den wenigstens einen Lagerabschnitt (44) umfasst.

3. Multifunktionsträger (10) nach Anspruch 1 oder 2,
**dadurch gekennzeichnet, dass**
mehrere Scharnierachsenabschnitte (42) und/oder mehrere Lagerabschnitte (44) segmentartig axial hintereinander angeordnet sind.

4. Multifunktionsträger (10) nach einem der Ansprüche 1 bis 3,
**dadurch gekennzeichnet, dass**
die Weite einer Aufnahmeöffnung (46b) wenigstens eines hakenartigen Lagerabschnitts (44b) etwa der Hälfte des Kreisdurchmessers eines Scharnierachsenabschnitts (42b) mit halbkreisförmigem Querschnitt entspricht.

5. Multifunktionsträger (10) nach einem der Ansprüche 1 bis 4,
**dadurch gekennzeichnet, dass**
die halbkreisförmigen Scharnierachsenabschnitte (42b, 42c) so orientiert sind, dass sie in der Montageposition des Multifunktionsträgers (10) in die Lagerabschnitte (44b, 44c) einführbar bzw. aus diesem entnehmbar sind.

6. Multifunktionsträger (10) nach einem der vorherigen Ansprüche,
**dadurch gekennzeichnet, dass**
eine Vorverriegelungseinrichtung (58, 60) zur Sicherung des Multifunktionsträgers (10) in der Montageposition vorgesehen ist.

7. Multifunktionsträger (10) nach Anspruch 6,
**dadurch gekennzeichnet, dass**
die Vorverriegelungseinrichtung einen an den Multifunktionsträger (10) angeformten Vorsprung (58) umfasst, der in der Montageposition des Multifunktionsträgers (10) mit einem an der Grundstruktur (12) vorgesehenen Anschlag (60) zusammenwirkt.

8. Multifunktionsträger (10) nach einem der vorherigen Ansprüche,
**dadurch gekennzeichnet, dass**
eine, insbesondere im Bereich eines der Scharnierachse entgegengesetzten Endes des Multifunktionsträgers (10) angeordnete, Rastvorrichtung (32, 34) vorgesehen ist, um den Multifunktionsträger (10) in einer Endmontageposition an der Grundstruktur (12) zu sichern.

9. Multifunktionsträger (10) nach Anspruch 8,
**dadurch gekennzeichnet, dass**
die Rastvorrichtung (32, 34) und die Scharnierachse im Bereich freier Enden beinartiger Vorsprünge (30, 38) des Multifunktionsträgers (10) angeordnet sind.

## Claims

1. A multifunctional holder (10) comprising a housing (20) for the reception of at least one electrical component connected to a base structure (12) of a vehicle by means of a hinge (40), wherein the multifunctional holder (10) can be pivoted around a hinge axis of the hinge (40) into an assembly position in which the connection of the multifunctional holder (10) and the base structure (12) can be released, wherein the multifunctional holder (10) and the base structure (12) form the wing parts of the hinge (40) and wherein the one wing part (10) has at least one hinge axis section (42) and the other wing part (12) has at least one support section (44) formed in the manner of a hook,
**characterized in that**
at least one first hinge axis section (42b) having a semi-circular cross-section and at least one second hinge axis section (42c) having a semi-circular cross-section complementary to the first hinge axis section (42 b) are provided.

2. A multifunctional holder (10) in accordance with claim 1, **characterized in that** the multifunctional holder (10) includes the at least one hinge axis section (42) and the base structure (12) includes the at least one support section (44).

3. A multifunctional holder (10) in accordance with claim 1 or claim 2, **characterized in that** a plurality of hinge axis sections (42) and/or a plurality of support sections (44) are arranged axially sequentially like segments.

4. A multifunctional holder (10) in accordance with any one of the claims 1 to 3, **characterized in that** the width of a reception opening (46b) of at least one hook-like support section (44b) corresponds to approximately half the circle diameter of a hinge axis section (42b) having a semi-circular cross-section.

5. A multifunctional holder (10) in accordance with any one of the claims 1 to 4, **characterized in that** the semi-circular hinge axis sections (42b, 42c) are oriented such that they can be inserted into or removed from the support sections (44b, 44c) in the assembly position of the multifunctional holder (10).

6. A multifunctional holder (10) in accordance with any one of the preceding claims, **characterized in that** a pre-latching device (58, 60) is provided to secure the multifunctional carrier (10) in the assembly position.

7. A multifunctional holder (10) in accordance with claim 6, **characterized in that** the pre-latching device comprises a projection (58) molded to the multifunctional holder (10) and cooperating with an abutment (60) provided at the base structure (12) in the assembly position of the multifunctional holder (10).

8. A multifunctional holder (10) in accordance with any one of the preceding claims, **characterized in that** a latching apparatus (32, 34), in particular arranged in the region of an end of the multifunctional holder (10) opposite to the hinge axis, is provided to secure the multifunctional holder (10) to the base structure (12) in a final assembly position.

9. A multifunctional holder (10) in accordance with claim 8, **characterized in that** the latching apparatus (32, 34) and the hinge axis are arranged in the region of free ends of leg-like projections (30, 38) of the multifunctional holder (10).

## Revendications

1. Support multifonctionnel (10) avec un boîtier (20) destiné à recevoir au moins un composant électrique, qui est relié à une structure de base (12) d'un véhicule au moyen d'une charnière (40), le support multifonctionnel (10) étant apte à pivoter autour d'une broche de la charnière (40) vers une position de montage, dans laquelle l'assemblage entre le support multifonctionnel (10) et la structure de base (12) est amovible, le support multifonctionnel (10) et la structure de base (12) formant les platines de la charnière (40) et l'une des platines (10) comportant au moins un segment de broche (42) et l'autre platine (12) comportant au moins un segment de charnon (44) réalisé en forme de crochet,
**caractérisé en ce qu'**il est prévu au moins un premier segment de broche (42b) avec une section semi-sphérique et au moins un deuxième segment de broche (42c) avec une section semi-sphérique complémentaire au premier segment de broche (42b).

2. Support multifonctionnel (10) selon la revendication 1, **caractérisé en ce que** le support multifonctionnel (10) comporte ledit au moins un segment de broche (42) et la structure de base (12) comporte ledit au moins un segment de charnon (44).

3. Support multifonctionnel (10) selon la revendication 1 ou 2, **caractérisé en ce que** plusieurs segments de broche (42) et/ou plusieurs segments de charnon (44) sont disposés en forme de tronçons alignés les uns derrière les autres dans le sens axial.

4. Support multifonctionnel (10) selon l'une quelconque des revendications 1 à 3, **caractérisé en ce que** la largeur d'une ouverture de réception (46b) d'au moins un segment de charnon (44b) en forme de crochet correspond sensiblement à la moitié du diamètre d'un segment de broche (42b) à section semi-sphérique.

5. Support multifonctionnel (10) selon l'une quelconque des revendications 1 à 4, **caractérisé en ce que** les segments de broche (42b, 42c) semi-sphériques sont orientés de telle sorte que, dans la position de montage du support multifonctionnel (10), ils peuvent être introduits dans les segments de charnon (44b, 44c) et être retirés hors de ceux-ci.

6. Support multifonctionnel (10) selon l'une quelconque des revendications précédentes, **caractérisé en ce qu'**il est prévu un dispositif de pré-blocage (58, 60) pour immobiliser le support multifonctionnel (10) dans la position de montage.

7. Support multifonctionnel (10) selon la revendication 6, **caractérisé en ce que** le dispositif de pré-blocage comporte une saillie (58), qui est formée sur le support multifonctionnel (10) et qui, dans la position de montage du support multifonctionnel (10), coopère avec une butée (60) prévue sur la structure de base (12).

8. Support multifonctionnel (10) selon l'une quelconque des revendications précédentes, **caractérisé en ce qu'**il est prévu un dispositif d'encliquetage (32, 34), agencé en particulier dans la zone d'une extrémité du support multifonctionnel (10), opposée à la broche de la charnière, afin d'immobiliser le support multifonctionnel (10) dans une position de montage finale sur la structure de base (12).

9. Support multifonctionnel (10) selon la revendication 8, **caractérisé en ce que** le dispositif d'encliquetage (32, 34) et la broche de la charnière sont agencés dans la zone des extrémités libres de saillies (30, 38) en forme de pieds sur le support multifonctionnel (10).
